# EUROPEAN PATENT SPECIFICATION

(11) **EP 1 697 162 B1**
(45) Date of publication and mention of the grant of the patent: **09.07.2008**
(21) Application number: 04806131.1
(22) Date of filing: 17.12.2004
(51) Int. Cl.: B60N 2/28, B60R 22/28, B60R 22/48

(54) **BELT TENSION INDICATOR**
GURTSPANNANZEIGE
INDICATEUR DE TENSION DE COURROIE

(30) Priority: 17.12.2003 GB 0329164
(43) Date of publication of application: 06.09.2006
(73) Proprietor: Britax Excelsior Limited, Hillswood Business Park Chertsey Surrey KT16 0RS (GB); BRITAX RÖMER Kindersicherheit GmbH, D-89077 Ulm (DE)
(72) Inventor: LANG, Heinz-Jurgen, 89275 Elchingen (DE); WETTER, Hermann, 89075 Ulm (DE); CARINE, David Shaun, Andover, Hampshire SP1 6DF (GB)
(74) Representative: Ablett, Graham Keith
(86) International application number: PCT/GB2004/005329
(87) International publication number: WO 2005/058635

(56) References cited:
- EP-A- 1 247 704
- EP-A- 1 262 383
- EP-A- 1 468 868
- GB-A- 2 349 615
- US-A- 5 749 601

## Description

The present invention relates to a belt tension indicator for indicating tension in a belt for tethering a child safety seat for instance.

Known prior art belt tension indicators are disclosed for instance in EP 1 247 704 A and tethered child safety seats with energy absorbing means are disclosed for instance in EP 1 262 383 A. Further belt force limiting devices are disclosed in US 5 749 601 A and GB 2 349 615 A.

The object of the present invention is to provide an improved belt tension indicator, in particular one in which provision is made for limiting the load applied by the belt to the child safety seat tethered by it.

According to the invention there is provided a belt tension indicator for indicating tension in a belt from a child safety seat to an anchorage, the indicator comprising:
- a housing accommodating an end of the belt;
- anchorage means extending from within the housing for securing the end of the belt to the anchorage;
- an at least partially resilient connection of the belt in the housing to the securing means, the connection allowing resilient withdrawal of the belt from the housing at least to a predetermined tension associated with correct installation of the belt;
- an indicator for indicating that the predetermined tension in the belt has been reached;
the resilient connection being adapted to allow further withdrawal of the belt at higher tension such as to limit deceleration of an occupant of the seat in an accident.

Preferably, the resilient connection is adapted to allow the further withdrawal in a resilient manner.

The resilient connection can be adapted to allow the further withdrawal at the same spring rate as that to the resilient withdrawal to the predetermined tension, in which case the resilient connection can include a single spring providing the resiliency to the predetermined tension and beyond.

Alternatively, the resilient connection can be adapted to allow the further withdrawal at a higher spring rate than that to the resilient withdrawal to the predetermined tension, in which case the resilient connection can include two different rate springs, the first providing for the resilience to the predetermined tension and the second providing for the high rate resilience, further withdrawal.

Again, wherein the resilient connection can be adapted to allow the further withdrawal at least partially at a steady tension, in which case, the resilient connection can include a member arranged to deform plastically to provide the steady tension.

### The anchorage means can be a clip or a length of strap

In certain embodiments, the resilient means can include a shaft on which the strap is wound and resiliently urges the shaft in rotation to wind in the strap, at least when the strap is tensioned to the predetermined tension. Conveniently, the spring or plastically deformable member can be arranged within the shaft, being fast with the shaft at one end and with the housing at the other end; and a spring for indicating the predetermined tension is arranged in series with the said spring or deformable member. Further, the spring for indicating the predetermined tension can be arranged to become coil bound in the event of the predetermined tension being exceeded. Preferably, the indicator is a disc having indicating marks and arranged on the shaft with the indicating marks visible through a window in the housing according to the tension in the strap. Preferably the housing is of moulded plastics material, enclosing metallic members interconnecting anchorage means and the resilient connection.

In another embodiment, the resilient connection includes:
- a central, transverse pin, the anchorage means being connected to the transverse pin;
- over-ridable stops adjacent the ends of the pins;
- a U member having the strap connected to the central limb of the U and spiral windings at the ends of the distal limbs, the ends of the transverse pin being received in the spiral windings terminating in fingers, with the terminal fingers engaging the over-ridable stops for resilient withdrawal of the strap up to at least the predetermined tension,
the arrangement being such that when the tension exceeds the predetermined tension, the terminal fingers over-ride the stops and windings un-wind with plastic deformation to provide the said limited deceleration.

Preferably, the indicating means is a flag carried on the U member and visible through a window in the housing. The indicating flag is crimped to the U member and able to slide along it when the tension exceeds the predetermined tension. Means can be included to limit the unwinding of the spiral windings, to provide a complete connection of the strap to the anchorage means in even of such unwinding.

To help understanding of the invention, a specific embodiment thereof will now be described by way of example and with reference to the accompanying drawings, in which:
Figure 1 is a side view of a child safety seat secured onto an adult car seat with a top tether including a tension indicator according to the invention;
Figure 2 is a perspective view of a first tension indicator of the invention;
Figure 3 is a cross-sectional plan view of the tension indicator of Figure 2;
Figure 4 is a cross-sectional side vi ew of the tension indicator of Figure 2;
Figure 5 is a view similar to Figure 3 of a variant, showing only certain components;
Figure 6 is a cross-sectional side vi ew on the line VI-VI in Figure 5;
Figure 7 is a cross-sectional front view of another tension indicator of the invention;
Figure 8 is a plan view of the tension indicator of Figure 7;
Figure 9 is a side view of the tension indicator of Figure 7;
Figure 10 is a partially sectioned perspective view of another embodiment of a tension indicator according to the invention;
Figure 11 is a similar view of the ind i cator of Figure 10, indicating predetermined tension;
Figure 12 is a similar view of the ind i cator of Figure 10, during plastic deformation during an accident; and
Figure 13 is a view similar to Figure 10 showing a variant.

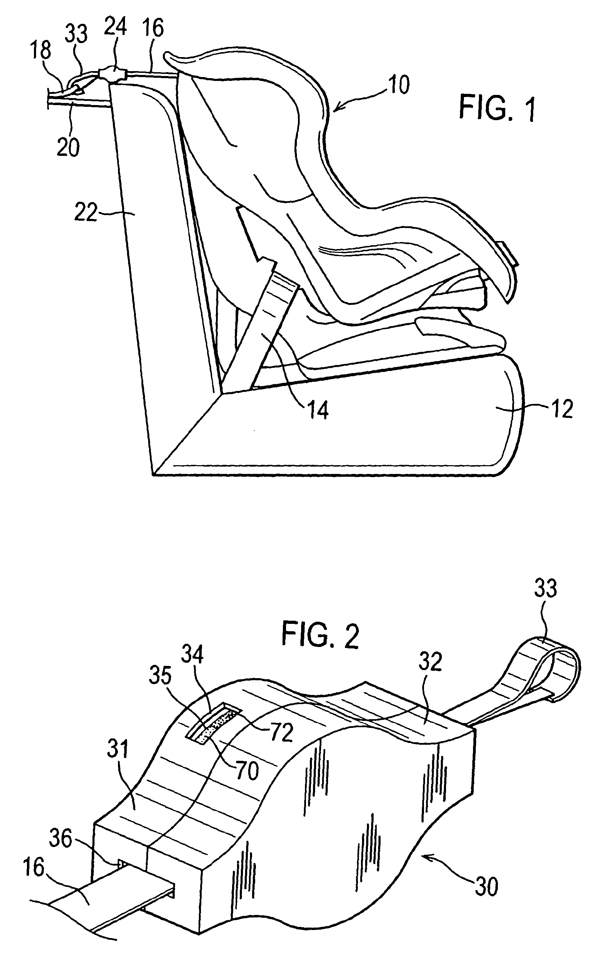

Referring first to Figure 1, there is shown a child safety seat 10 mounted on a vehicle seat 12 and secured in place by the lap strap 14 of a vehicle seat belt associated with the seat 12. In addition, a top tether strap 16 extends from an upper part of the child seat 10 to an anchorage 18 on a parcel shelf 20 located behind the backrest 22 of the vehicle seat 12. The tether strap 16 is connected to the anchorage 18 by a tension indicator 24 in accordance with the invention.

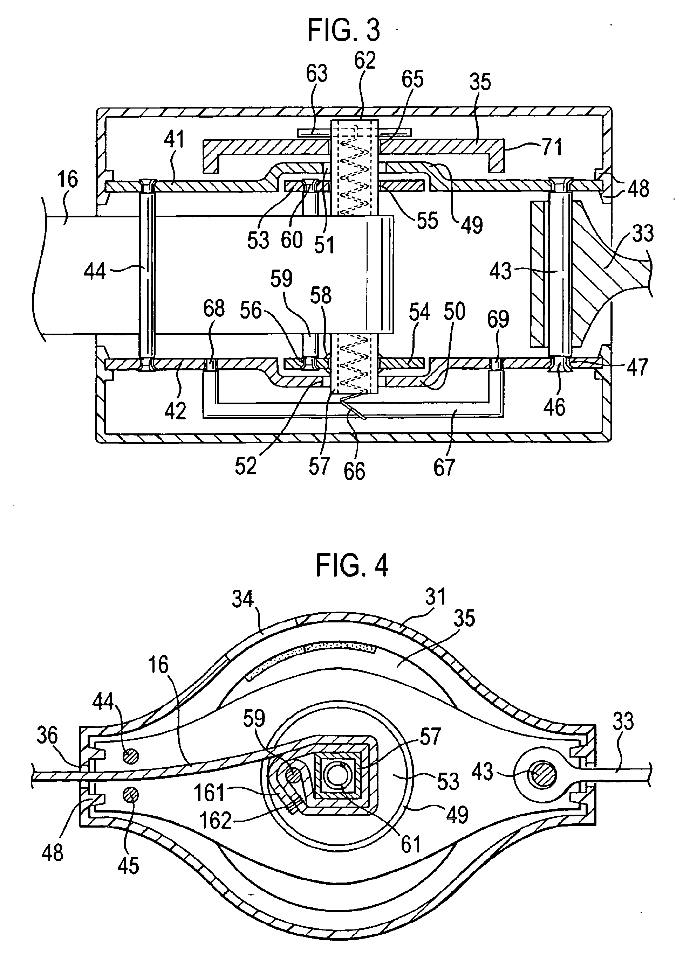

Referring now to Figures 2 to 4, the tension indicator has a moulded plastics material casing 30 comprised of two inter-engaging halves 31,32, clipped together along a median plane. An anchorage clip 33 extends from the rear of the casing. A window 34 in the top of the casing exposes an indicating disc 35, and a front mouth 36 allows the strap to enter the casing. Internally, the indicator has two steel side plates 41,42. They are interconnected by a thicker, load bearing rear pin 43, on which the clip 33 is pivoted, and two thinner, front location pins 44, 45, between which the strap passes. The pins have stepped down outer ends 46 which are peened into countersinks in the outside of apertures 47 in the plates. Thus the plates are secured at a determined spacing and the casing halves can be clipped and held to them by moulded formations 48.

The plates are pressed and formed with dishes 49,50, which face each other. The dishes have concentric apertures 51,52. Received in the dishes are discs 53,54, each stamped with a central square cut-out 55 and an offset bore 56. A main shaft 57 of square tube is received in the discs and held in place by crimps 58, with the discs at right angles to the tube. A rod 59 with turned down ends 60 is located between the discs at the bores 56. This assembly 51,52,57,59 forms a spool for the end of the strap 16, which is looped around the tube 57, with a piece 161 turned back and stitched 162 in place. The loop is restrained from turning on the shaft by the rod 59. It should be noted that the plates 41,42 are set apart with sufficient distance to avoid the strap fouling the plates when a few turns are wound around the tube.

The tube houses a wound wire torsion spring 61. One end 62 of this - on the same side of the indicator as the indicating disc 35 and its window 34 - is engaged with the tubular shaft via a cross pin 63 engaging in a cross-bore at the end of the tube. The pin also holds the indicating disc onto the shaft, the disc having a square cut-out 65, whereby it is rotationally fast with the shaft. End thrust on the tube from the spring is reacted by the disc to the outside of the dish 49 in the side plate 41. The other end 66 of the spring engages with a U-shaped cross pin 67 whose ends 68 engage in one of a series of pairs of apertures 69 in the side plate 42.

For use, the spring 61 is wound at its end 66 to wind the strap around the shaft, typically by 2 ½ turns. The winding is temporarily stopped with a green sector 70 of the rim 71 of the indicating disc 35 in the position of the window 34. The turning is continued to bring a red sector 72 to the window's position. The device is then set by engaging the cross pin in the relevant ones of the apertures 69. The rate of the spring is such that when the strap is drawn out to show the green sector at the window (after fitting the casing 30) the strap is tensioned to the desired strap tension.

For use, the top tether is adjusted at a clamp (not shown) in the child seat to the desired tension, typically 50 N. In an emergency, the top tether is pulled from the indicator in a load limiting manner until all the turns around the shaft are paid out. Then the tension in the strap is reacted directly via the shaft, the side plates and the clip to the anchorage.

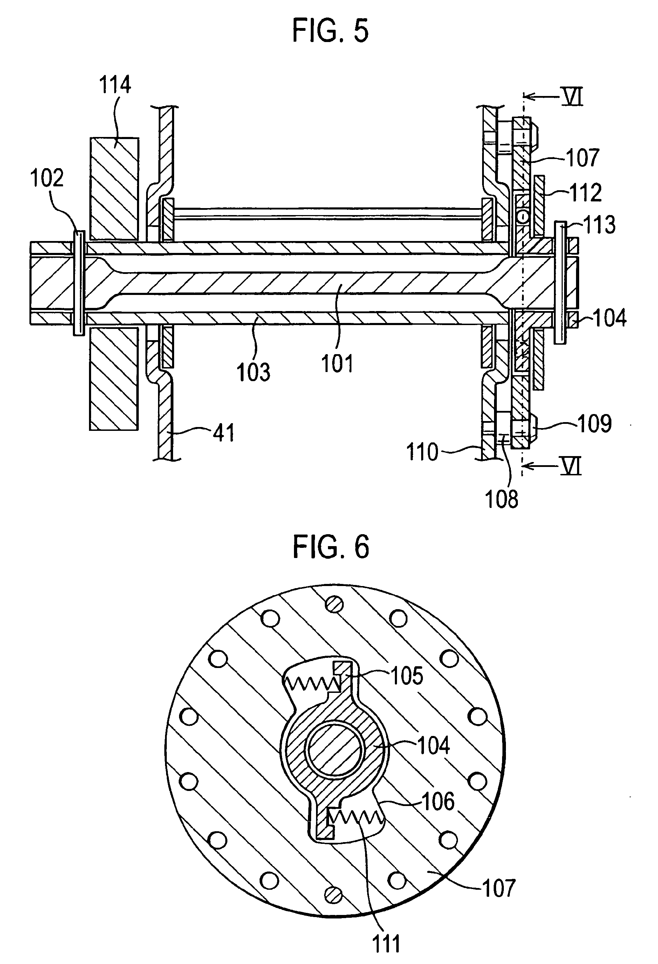

Turning now to Figures 5 and 6, a variant is shown in which the spring 61 is replaced by a torsion bar 101 of soft or wrought iron. This material is able to withstand considerably more plastic deformation in twisting than mild steel and hence is well adapted to absorbing energy as it deforms to apply deceleration to an occupant of safety seat over an extended time interval. The central portion only of the load limiting tension indicator is shown in Figures 5 and 6, the peripheral components being as described in the preceding embodiment.

The torsion bar 101 at its indicator disc end is pinned 102 to the square tube shaft 103. Its other end is pinned to a hub member 104, having radial fingers 105. These extend into voids 106 in a disc 107, which is pinned 108 and clipped 109 to the side plate 110 at a position chosen in accordance with the length of strap wound onto the shaft 103. Small compression springs 111 are accommodated in the voids and abutted by the sides of the voids in one direction and the fingers 105 in the other. Axially of the shaft, the springs are retained by the plate 110 on one side and a washer 112 on the other side. The washer is held in place by a pin 113 pinning the hub 104 to the torsion bar 101.

In normal use, tension of the strap (not shown in Figure 5) turns the spool assembly including the shaft 103. This movement is conveyed to the torsion bar via the pin 102. The action is transferred to the hub 104, which compresses the springs 111. When the predetermined tension in the strap has been applied, in effect assuring that there is no slack in it, the springs have been compressed. They react the tension and the consequent rotation of the shaft is indicated by the indicator disc 114.

In an accident, the strap tension increases. The shaft is held from rotation by the springs being coil bound. The torsion bar then twists, dissipating energy as described.

In a non-illustrated alternative, the torsion bar can be replaced by a spring such as 61, but having a stiffer rate. It in effect is in series with the springs 111 as regards its torsional effect, in the same way as the torsion bar is. It dissipates energy also in an accident, with the added advantage to being able to rewind the strap on rebound. Further the spring could be arranged to dissipate energy plastically. For this it may be preferable to place a torsion bar in series with a spring both within the shaft 103.

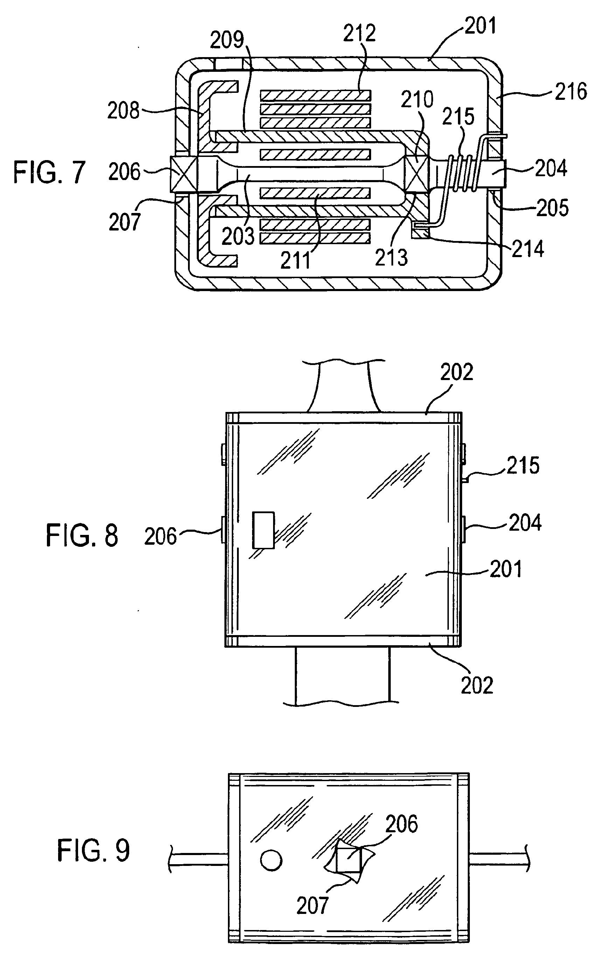

Turning on to Figures 7, 8 and 9, the indicator thereshown is housed in a short length of rectangular steel tube 201, with plastic material end caps 202, themselves having openings (not shown) for a strap and an anchor clip. A torsion bar 203 extends across the tube and has a plain end 204 in a plain bore 205 - on the right hand side in Figure 7. The bar has a square section end 206 at its other end, engaging in a contoured aperture 207, allowing limited rotation. Journalled immediately inside the end 206 is an indicator disc 208. This is rotationally engaged by a strap tube 209, itself rotationally fast with the torsion bar at a second square section 210. The strap has a central loop 211 extending through a longitudinal slit (not shown) in the tube. The strap is wound 212 around the outside of the tube. At the square 210, the tube has an end with a square aperture 213 for engaging the torsion bar. It also has a lug 214 with an aperture engaging a small torsion spring 215, the other end of which is engaged in the side wall 216 of the tube 201. The tube has a window for viewing the indicator disc 208.

In normal use, the torsion bar, strap tube and indicator disc rotate as a unit, under the influence of the strap in one direction and the spring 215 in the other. The square 206 of the bar and the contoured aperture 213 limit the rotational movement under normal use. In an accident, with more strap being pulled out, the spring 215 is wrenched from its engagement apertures and the rotation of the strap tube is resisted by the torsion bar. This twists plastically, dissipating energy.

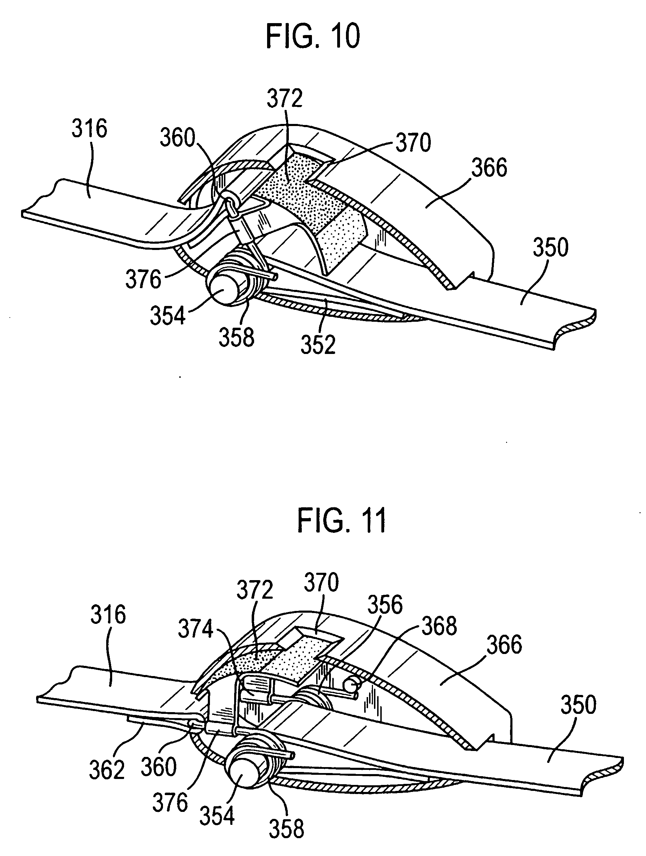

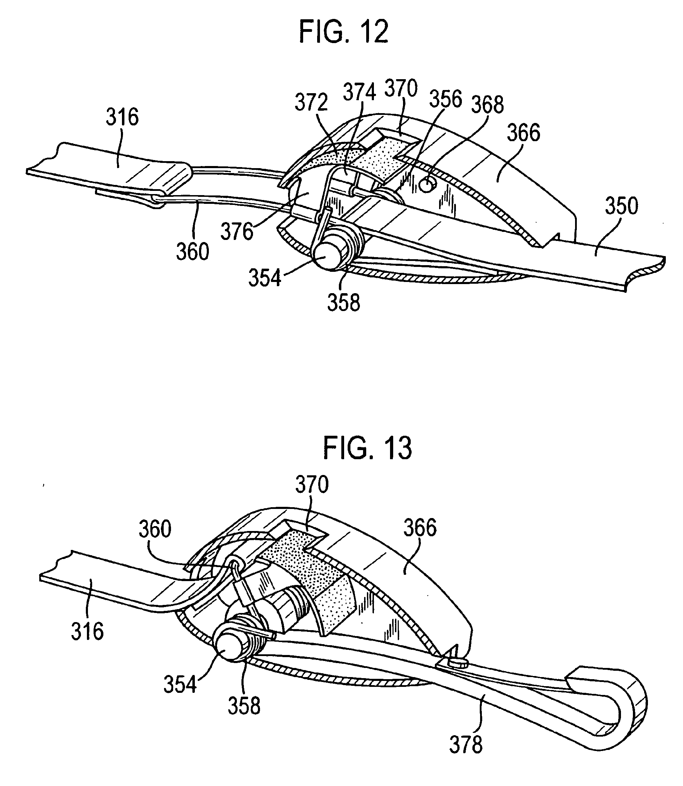

Turning now to Figures 10, 11 and 12, Figure 10 illustrates an alternative tension detector in which the hook 330 is replaced by a second flexible strap 350 having its end stitched into a loop 352 that wraps round a central shaft 354. A U-shaped one-piece coil spring has two coiled end portions 356 and 358 wrapped round the shaft 354. The end portions 356 and 58 are inter-connected by a central stirrup 360. The tether strap 316 has a loop 362 sewn into its end which engages round the stirrup 360. The ends of the shaft 354 are journalled in side walls of a housing 366. Each side wall has an inwardly direct abutment projection 368, one of which is visible in Figures 11 and 12.

The upper surface of the housing 366 includes a window 370 through which an arcuate indicator 372 is visible. The indicator 372 has side legs 374 and 376 that are slidably mounted on the stirrup 360.

When the strap 316 is relaxed, the left hand end of the arcuate indicator 372 is visible through the window 370, as shown in Figure 12. When the strap 316 is tightened, the arcuate indicator 372 pivots to the position shown in Figure 11 in which its right hand end, which is of a different colour to its left hand end, is visible through the window 370, indicating that the strap 316 has been tightened adequately.

In the event of a crash, the coiled end portions 356 and 358 of the spring over-ride the abutment projections 368 and partially unwrap from the shaft 354 so that an extended stirrup portion 360 projects from the housing 366 as shown in Figure 12.

Figure 13 shows another form of tension detector which is identical to the tension detector shown in Figures 10 to 12, except that the second strap 350 is replaced by a hook 378, similar to the hook 33 of Figures 1 to 4. Additionally the free ends of the coiled end portions 356,358 are looped together to avoid the possibility of them unwinding completely off the shaft 354.

## Claims

1. A belt tension indicator (24) for indicating tension in a belt (16) from a child safety seat to an anchorage (18), the indicator comprising:
• a housing (30) accommodating an end of the belt (16);
• anchorage means (33) extending from within the housing for securing the end of the belt to the anchorage (18),
• an at least partially resilient connection of the belt in the housing to the anchorage means, the connection allowing resilient withdrawal of the belt from the housing at least to a predetermined tension associated with correct installation of the belt;
• an indicator for indicating that the predetermined tension in the belt has been reached;
the resilient connection being adapted to allow further withdrawal of the belt at higher tension such as to limit deceleration of an occupant of the seat in an accident.

2. A belt tension indicator as claimed in claim 1, wherein the resilient connection is adapted to allow the further withdrawal in a resilient manner.

3. A belt tension indicator as claimed in claim 2, wherein the resilient connection is adapted to allow the further withdrawal at the same spring rate as that to the resilient withdrawal to the predetermined tension.

4. A belt tension indicator as claimed in claim 3, wherein the resilient connection includes a single spring providing the resiliency to the predetermined tension and beyond.

5. A belt tension indicator as claimed in claim 2, wherein the resilient connection is adapted to allow the further withdrawal at a higher spring rate than that to the resilient withdrawal to the predetermined tension.

6. A belt tension indicator as claimed in claim 5, wherein the resilient connection includes two different rate springs, the first providing for the resilience to the predetermined tension and the second providing for the high rate resilience, further withdrawal.

7. A belt tension indicator as claimed in claim 2, wherein the resilient connection is adapted to allow the further withdrawal at least partially at a steady tension.

8. A belt tension indicator as claimed in claim 7, wherein the resilient connection includes a member arranged to deform plastically to provide the steady tension.

9. A tension indicator as claimed in any preceding claim, wherein the anchorage means is a clip.

10. A tension indicator as claimed in any one of claims 1 to 8, wherein the anchorage means is a length of strap

11. A tension indicator as claimed in any preceding claim, wherein the resilient means includes a shaft on which the strap is wound and resiliently urges the shaft in rotation to wind in the strap, at least when the strap is tensioned to the predetermined tension.

12. A belt tension indicator as claimed in claim 11 as appendant to claim 4, 6 or 8, wherein the spring or plastically deformable member is arranged within the shaft, being fast with the shaft at one end and with the housing at the other end.

13. A belt tension indicator as claimed in claim 12, wherein a spring for indicating the predetermined tension (the first spring of claim 6) is arranged in series with the said spring or deformable member.

14. A belt tension indicator as claimed in claim 13, wherein the spring for indicating the predetermined tension is arranged to become coil bound in the event of the predetermined tension being exceeded.

15. A belt tension indicator as claimed in any one of claims 11 to 14, wherein the indicator is a disc having indicating marks and arranged on the shaft with the indicating marks visible through a window in the housing according to the tension in the strap.

16. A belt tension indicator as claimed in any one of claims 11 to 15, wherein the housing is of moulded plastics material, enclosing metallic members interconnecting anchorage means and the resilient connection.

17. A belt tension indicator as claimed in claim 7, wherein the resilient connection includes:
• a central, transverse pin (354), the anchorage means being connected to the transverse pin;
• over-ridable stops (368) adjacent the ends of the pin;
• a U member having the strap (316) connected to the central limb (360) of the U and spiral windings (356, 358) at the ends of the distal limbs, the ends of the transverse pin being received in the spiral windings terminating in fingers, with the terminal fingers engaging the over-ridable stops (368) for resilient withdrawal of the strap up to at least the predetermined tension,
the arrangement being such that when the tension exceeds the predetermined tension, the terminal fingers over-ride the stops (368) and windings un-wind with plastic deformation to provide the said limited deceleration.

18. A belt tension indicator as claimed in claim 17, wherein the indicating means is a flag carried on the U member and visible through a window in the housing.

19. A belt tension indicator as claimed in claim 18, wherein the indicating flag is crimped to the U member and able to slide along it when the tension exceeds the predetermined tension.

20. A belt tension indicator as claimed in claim 17, claim 18 or claim 19, including means to limit the unwinding of the spiral windings, to provide a complete connection of the strap to the anchorage means in even of such unwinding.

## Patentansprüche

1. Gurtspannanzeige (24) zum Anzeigen der Spannung in einem Gurt (16) von einem Kindersicherheitssitz auf eine Verankerung (18), wobei die Anzeige Folgendes aufweist:
• ein Gehäuse (30), das ein Ende des Gurts (16) aufnimmt;
• eine Verankerungseinrichtung (33), die sich von innerhalb des Gehäuses aus erstreckt, um das Ende des Gurts an der Verankerung (18) zu befestigen;
• eine zumindest teilweise elastische Verbindung des Gurts im Gehäuse zur Verankerungseinrichtung, wobei diese Verbindung ein elastisches Herausziehen des Gurts aus dem Gehäuse bis mindestens auf eine vorbestimmte Spannung, die der korrekten Installation des Gurts zugeordnet ist, erlaubt;
• eine Anzeige zum Anzeigen, dass die vorbestimmte Spannung im Gurt erreicht ist;
wobei die elastische Verbindung so ausgebildet ist, dass sie ein weiteres Herausziehen des Gurts mit höherer Spannung ermöglicht, um die Verzögerung eines Insassen des Sitzes bei einem Unfall zu begrenzen.

2. Gurtspannanzeige nach Anspruch 1, bei der die elastische Verbindung so ausgebildet ist, dass sie ein weiteres Herausziehen.auf elastische Weise erlaubt.

3. Gurtspannanzeige nach Anspruch 2, bei der die elastische Verbindung so ausgebildet ist, dass sie ein weiteres Herausziehen mit derselben Federrate wie beim elastischen Herausziehen bis auf die vorbestimmte Spannung erlaubt.

4. Gurtspannanzeige nach Anspruch 3, bei der die elastische Verbindung eine einzelne Feder aufweist, die für die Elastizität bis auf die vorbestimmte Spannung und darüber hinaus sorgt.

5. Gurtspannanzeige nach Anspruch 2, bei der die elastische Verbindung so ausgebildet ist, dass sie ein weiteres Herausziehen mit einer höheren Federrate als beim elastischen Herausziehen bis zur vorbestimmten Spannung erlaubt.

6. Gurtspannanzeige nach Anspruch 5, bei der die elastische Verbindung zwei Federn mit verschiedenen Federraten aufweist, wobei die erste :für die Elastizität bis zur vorbestimmten Spannung sorgt und die zweite bei weiterem Herausziehen für die Elastizität mit hoher Federrate sorgt.

7. Gurtspannanzeige nach Anspruch 2, bei der die elastische Verbindung so ausgebildet ist, dass sie ein weiteres Herausziehen zumindest teilweise bei konstanter Spannung erlaubt.

8. Gurtspannanzeige nach Anspruch 7, bei der die elastische Verbindung ein Element aufweist, das so ausgebildet ist, dass es sich plastisch verformt, um für konstante Spannung zu sorgen.

9. Spannanzeige nach einem der vorstehenden Ansprüche, bei der die Verankerungseinrichtung eine Klammer ist.

10. Spannanzeige nach einem der Ansprüche 1 bis 8, bei der die Verankerungseinrichtung ein Stück eines Bands ist.

11. Spannanzeige nach einem der vorstehenden Ansprüche, bei der die elastische Einrichtung einen Schaft aufweist, auf den das Band gewickelt ist, mit elastischer Drehbelastung des Schafts zum Aufwickeln des Bands zumindest dann, wenn dieses bis auf die vorbestimmte Spannung gespannt ist.

12. Gurtspannanzeige nach Anspruch 11 in Abhängigkeit vom Anspruch 4, 6 oder 8, bei der die Feder oder das plastisch verformbare Element innerhalb des Schafts angeordnet ist, wobei es an einem Ende fest mit dem Schaft und am anderen Ende mit dem Gehäuse verbunden ist.

13. Gurtspannanzeige nach Anspruch 12, bei der eine Feder zum Anzeigen der vorbestimmten Spannung (erste Feder des Anspruchs 6) in Reihe mit der genannten Feder oder: dem verformbaren Element angeordnet ist.

14. Gurtspannanzeige nach Anspruch 13, bei der die Feder zum Anzeigen der vorbestimmten Spannung so angeordnet ist, dass sie spiralbegrenzt wird, wenn die vorbestimmte Spannung überschritten wird.

15. Gurtspannanzeige nach einem der Ansprüche 11 bis 14, bei der die Anzeige eine Scheibe mit Anzeigemarkierungen ist, die auf dem Schaft so angeordnet ist, dass die Anzeigemarkierungen entsprechend der Spannung im Band durch ein Fenster im Gehäuse sichtbar sind.

16. Gurtspannanzeige nach einem der Ansprüche 11 bis 15, bei der das Gehäuse aus einem geformten Kunststoffmaterial besteht, das metallische Elemente einschließt, die die Verankerungseinrichtung und die elastische Verbindung miteinander verbinden.

17. Gurtspannanzeige nach Anspruch 7, bei der die elastische Verbindung Folgendes aufweist:
• einen zentralen Querstift (354), mit dem die Verankerungseinrichtung verbunden ist;
• überschreitbare Anschläge (368) angrenzend an die Enden des Stifts;
• ein U-Element, wobei das Band (316) mit dem mittleren Schenkel (360) des U verbunden ist, und mit spiralförmigen Windungen (356, 358) an den Enden der distalen Schenkel, wobei die Enden des Querstifts in den im Finger endenden Spiralwindungen aufgenommen sind, und die Endfinger mit den überschreitbaren Anschlägen (368) in Eingriff stehen, um das Band elastisch bis auf zumindest die vorbestimmte Spannung herauszuziehen;
wobei die Anordnung dergestalt ist, dass dann, wenn die Spannung die vorbestimmte Spannung überschreitet, die Endfinger die Anschläge (368) überschreiten und die: Windungen mit plastischer Verformung aufgewunden werden, um für die genannte begrenzte Verzögerung zu sorgen.

18. Gurtspannanzeige nach Anspruch 17, bei der die Anzeigeeinrichtung eine vom U-Element mitgenommene Markierungsfahne ist, die durch ein Fenster im Gehäuse hindurch sichtbar ist.

19. Gurtspannanzeige nach Anspruch 18, bei der die Anzeigefahne um das U-Element gefalzt ist und entlang diesem verschoben werden kann, wenn die Spannung die vorbestimmte Spannung überschreitet.

20. Gurtspannanzeige nach Anspruch 17, Anspruch 18 oder Anspruch 19, mit einer Einrichtung zum Begrenzen des Aufwindens der Spiralwindungen, um für eine vollständige Verbindung des Bands mit Verankerungseinrichtung selbst bei einem derartigen Aufwinden zu sorgen.

## Revendications

1. Indicateur (24) de tension de courroie permettant d'indiquer la tension dans une ceinture (16) exercée par un siège de sécurité pour enfant sur un ancrage (18), l'indicateur comprenant :
• un boîtier (30) recevant à une extrémité de la ceinture ;
• des moyens d'ancrage (33) s'étendant depuis l'intérieur du boîtier pour fixer l'extrémité de la ceinture à l'ancrage (18) ;
• une liaison au moins partiellement élastique de la ceinture dans le boîtier aux moyens d'ancrage, la liaison permettant la sortie élastique de la ceinture depuis le boîtier sous au moins une tension prédéterminée liée à l'installation correcte de la ceinture ;
• un indicateur pour indiquer que la tension prédéterminée dans la ceinture a été atteinte ;
la liaison élastique étant adaptée pour permettre une sortie supplémentaire de la ceinture sous une tension plus élevée de manière à limiter la décélération d'un occupant du siège en cas d'un accident.

2. Indicateur de tension de courroie selon la revendication 1, dans lequel la liaison élastique est adaptée pour permettre la sortie supplémentaire d'une façon élastique.

3. Indicateur de tension de courroie selon la revendication 2, dans lequel la liaison élastique est adaptée pour permettre la sortie supplémentaire selon le même coefficient de rappel que celui de la sortie élastique se produisant sous la tension prédéterminée.

4. Indicateur de tension de courroie selon la revendication 3, dans lequel la liaison élastique inclut un ressort unique fournissant l'élasticité sous la tension prédéterminée et au-delà.

5. Indicateur de tension de courroie selon la revendication 2, dans lequel la liaison élastique est adaptée pour permettre la sortie supplémentaire selon un coefficient de rappel plus élevé que celui de la sortie élastique se produisant sous la tension prédéterminée.

6. Indicateur de tension de courroie selon la revendication 5, dans lequel la liaison élastique inclut deux ressorts à coefficients différents, le premier fournissant la résilience sous la tension prédéterminée et le deuxième fournissant la résilience de coefficient élevé, pour sortie supplémentaire.

7. Indicateur de tension de courroie selon la revendication 2, dans lequel la liaison élastique est adaptée pour permettre la sortie supplémentaire au moins partiellement sous une tension régulière.

8. Indicateur de tension de courroie selon la revendication 7, dans lequel la liaison élastique inclut un organe agencé pour se déformer plastiquement afin de fournir la tension régulière.

9. Indicateur de tension suivant l'une quelconque des revendications précédentes, dans lequel les moyens d'ancrage sont une attache élastique.

10. Indicateur de tension selon l'une quelconque des revendications 1 à 8, dans lequel les moyens d'ancrage sont une longueur de courroie.

11. Indicateur de tension suivant l'une quelconque des revendications précédentes, dans lequel les moyens résilients incluent un axe sur lequel la courroie est enroulée et sollicitent élastiquement l'axe en rotation pour enrouler la courroie, au moins lorsque la courroie est tendue selon la tension prédéterminée.

12. Indicateur de tension de courroie selon la revendication 11 en tant qu'elle est rattachée aux revendications 4, 6 ou 8, dans lequel le ressort ou l'organe plastiquement déformable est agencé à l'intérieur de l'axe, étant relié à l'axe par une extrémité et avec le boîtier par l'autre extrémité.

13. Indicateur de tension de courroie selon la revendication 12, dans lequel un ressort pour indiquer la tension prédéterminée (le premier ressort selon la revendication 6) est agencé en série avec ledit ressort ou ledit organe déformable.

14. Indicateur de tension de courroie selon la revendication 13, dans lequel le ressort pour indiquer la tension prédéterminée est agencé pour venir en limite d'enroulement dans le cas où la tension prédéterminée est dépassée.

15. Indicateur de tension de courroie selon l'une quelconque des revendications 11 à 14, dans lequel l'indicateur est un disque ayant des marques d'indication et étant disposé sur l'axe avec les marques d'indication visibles par une fenêtre aménagée dans le boîtier, en fonction de la tension dans la courroie.

16. Indicateur de tension de courroie selon l'une quelconque des revendications 11 à 15, dans lequel le boîtier est en matériau plastique moulé, enfermant des organes métalliques reliant ensemble les moyens d'ancrage et la liaison élastique.

17. Indicateur de tension de courroie selon la revendication 7, dans lequel la liaison élastique inclut :
• une broche (354) centrale et transversale, les moyens d'ancrage étant reliés à la broche transversale ;
• des butées franchissables (368) adjacentes aux extrémités de la broche ;
• un organe en U ayant la courroie (316) reliée à la branche centrale (360) du U et des enroulements en spirale (356, 358) aux extrémités des branches distales, les extrémités de la broche transversale étant reçues dans les enroulements en spirale se terminant par des doigts, les doigts terminaux venant en prise avec les butées franchissables pour la sortie élastique de la courroie sous au moins la tension prédéterminée,
l'agencement étant tel que, lorsque la tension dépasse la tension prédéterminée, les doigts terminaux franchissent les butées (368) et les enroulements se déroulent avec une déformation plastique pour fournir ladite décélération limitée.

18. Indicateur de tension de courroie selon la revendication 17, dans lequel les moyens d'indication sont un élément de signalisation porté par l'organe en U et visible par une fenêtre aménagée dans le boîtier.

19. Indicateur de tension de courroie selon la revendication 18, dans lequel l'élément de signalisation est serti sur l'organe en U et apte à glisser le long de lui lorsque la tension dépasse la tension prédéterminée.

20. Indicateur de tension de courroie selon la revendication 17, la revendication 18 ou la revendication 19, comprenant des moyens de limiter le déroulement des enroulements en spirale, pour fournir une liaison complète de la courroie aux moyens d'ancrage même en cas d'un tel déroulement.
